# EUROPEAN PATENT APPLICATION

(11) **EP 2 884 816 A1**
(43) Date of publication of application: **17.06.2015**
(21) Application number: 13832032.0
(22) Date of filing: 03.09.2013
(51) Int. Cl.: H04W 88/08

(54) **METHOD, SYSTEM AND DEVICE FOR AUTOMATICALLY CONFIGURING REMOTE RADIO UNIT**

(30) Priority: 03.09.2012 CN 201210321779
(71) Applicant: ZTE Corporation, Shenzhen, Guangdong 518057 (CN)
(72) Inventor: HUANG, Fengqian, Shenzhen Guangdong 518057 (CN); WEN, Wanqiang, Shenzhen Guangdong 518057 (CN)
(74) Representative: Vossius & Partner Patentanwälte Rechtsanwälte mbB
(86) International application number: PCT/CN2013/082871
(87) International publication number: WO 2014/032629

(57) **Abstract**

Provided is a method, system and device for automatically configuring a remote radio unit. The RRU determines configuration information corresponding to the index information received from a BBU (101) according to correspondence between preset index information and configuration information, and the RRU performs configuration processing according to the configuration information (102). Multiple sets of configuration information are stored in the RRU, and when different configuration information is required to be used, the modification of the configuration information about the RRU can be completed by simply notifying the RRU of the index information corresponding to the configuration to be modified.

## Description

### TECHNICAL FIELD

The present disclosure relates to the field of wireless mobile communications, and particularly to a method, system and device for automatically configuring a remote radio unit.

### BACKGROUND

At present, distributed base station architecture has been widely used in wireless communication networks, comprising a building baseband unit BBU and a remote radio unit RRU which communicate via optical fibre.

Traditional radio implementations are based on hardware to implement specific applications. For each type of individual wireless interfaces and combination of various frequency bands, an integrated circuit is designed to implement the specific application and function. In the course of design or manufacture of such a terminal, the capacity of the terminal has been limited by hardware coding, and additional function units will be required in order to add or modify any desired operating mode.

When this radio implementation method is applied to a digital remote radio system, in terms of design of digital up-converters and digital down-converters, specific chips should be chosen to meet different configuration requirements, so as to adapt to different operating environments. Thus, a remote radio system can be only adapted to application scenarios with specified operating environment once its configuration information has been specified, and the configuration information of the RRU can be modified only by upgrading the version of the RRU.

In conclusion, when it is desired to modify the configuration information of an RRU in a digital remote radio system, it is required to perform upgrade processing to the version of the RRU, which makes the modification procedure of the configuration information complicated.

### SUMMARY

According to embodiments of the present disclosure, a method, system and device for automatically configuring a remote radio unit are provided, so as to solve the problem that in a digital remote ratio system, the configuration information about an RRU can be modified only by upgrading the version of RRU, which makes the modification procedure of the configuration information of the RRU complicated.

In an embodiment of the disclosure, a method for automatically configuring a remote radio unit (RRU) is provided, which includes:
determining, according to a correspondence between preset index information and configuration information, the configuration information corresponding to the index information received from a building baseband unit (BBU); and performing, configuration according to the configuration information.

Preferably, it is determined whether hardware attribute information in the configuration information corresponding to the index information received from the BBU conforms to hardware attribute of the RRU. When the hardware attribute information in the configuration information corresponding to the index information received from the BBU does not conform to the hardware attribute of the RRU, a warning is issued; or the hardware attribute information in the configuration information corresponding to the index information received from the BBU is modified according to the hardware attribute of the RRU, to make the modified hardware attribute information conform to the hardware attribute of the RRU.

In an embodiment of the disclosure, a method for automatically configuring a remote radio unit, which includes:
determining, by a building baseband unit (BBU), the configuration information corresponding to the index information received from background according to the correspondence between preset index information and configuration information, and transmitting the determined configuration information to the RRU; and performing, by the RRU, configuration according to the received configuration information.

Preferably, the RRU determines whether hardware attribute information in the configuration information corresponding to the index information received from the BBU conforms to hardware attribute of the RRU. When the hardware attribute information in the configuration information corresponding to the index information received from the BBU does not conform to the hardware attribute of the RRU, a warning is issued; or the hardware attribute information in the configuration information corresponding to the index information received from the BBU is modified according to the hardware attribute of the RRU, to make the modified hardware attribute information conform to the hardware attribute of the RRU.

In an embodiment of the disclosure, a device for automatically configuring a remote radio unit (RRU) is provided, which includes:
an information filtering unit configured to, according to correspondence between preset index information and configuration information, determine the configuration information corresponding to index information received from a building baseband unit (BBU); and
an information configuration unit configured to perform configuration according to the configuration information.
the information filtering unit is further configured to:
   after determining the configuration information corresponding to the index information received from the BBU, determine whether the hardware attribute information in the configuration information corresponding to the index information received from the BBU conforms to hardware attribute of the RRU.

The information filtering unit is further configured to, after determining that the hardware attribute information in the configuration information corresponding to the index information received from the BBU does not conform to the hardware attribute information of the RRU, issue a warning; or, modify hardware attribute information in the configuration information corresponding to the index information received from the BBU according to the hardware attribute of the RRU, so as to make the modified hardware attribute information conform to the hardware attribute of the RRU.

In an embodiment of the disclosure, a remote radio unit (RRU) is provided, which includes:
a configuration information receiving unit configured to receive configuration information from a building baseband unit (BBU), wherein the configuration information is the configuration information with which, according to the correspondence between preset index information and configuration, a BBU determines that the index information received from background accords; and
a configuration information processing unit configured to perform configuration according to received configuration information.

The configuration information processing unit is configured to, after determining that the hardware attribute information in the received configuration information does not conform to the hardware attribute information of the RRU, issue a warning; or, modify the hardware attribute information in the received configuration information according to the hardware attribute of the RRU, so as to make the modified hardware attribute information conform to the hardware attribute of the RRU.

In an embodiment of the disclosure, a system for automatically configuring a remote radio unit (RRU) is provided, which includes:
a building baseband unit (BBU) configured to, according to the correspondence between preset index information and configuration information, determine configuration information corresponding to index information received from background, send the determined configuration information to the RRU; and
an RRU configured to perform configuration according to the configuration information received.

In the embodiments of the present disclosure, an RRU determines the configuration information corresponding to the index information received from a BBU according to the correspondence between preset index information and configuration information, and the RRU performs configuration processing according to the configuration information. For existing RRUs, a set of configuration information is configured therein, that is, there is a problem that the modification of the configuration information can be performed only by upgrading the version of RRU when the hardware attribute of the RRU changes; on the contrary, in the embodiments of the present disclosure, there are multiple sets of configuration information stored in an RRU, the modification to the configuration information of the RRU being performed by informing the RRU of the index information corresponding to the modified configuration information when different configuration information is required, which simplifies the modification procedure of the configuration information of the RRU.

### BRIEF DESCRIPTION OF THE DRAWINGS

Fig. 1 is a flow chart view of a method for automatically configuring a remote radio unit according to the embodiments of the present disclosure, in which an RRU receives the correspondence between index information and configuration information;
Fig. 2 is a flow chart view of a method for automatically configuring a remote radio unit according to the embodiments of the present disclosure, in which an RRU receives the correspondence between power index information and configuration information;
Fig. 3 is a flow chart view of a method for automatically configuring a remote radio unit according to the embodiments of the present disclosure, in which an RRU receives configuration information;
Fig. 4 is a flow chart view of a method for automatically configuring a remote radio unit according to the embodiments of the present disclosure, in which an RRU receives configuration information of country code;
Fig. 5 is a schematic view of a device for receiving the correspondence between index information and configuration information according to the embodiment of the present disclosure;
Fig. 6 is a schematic view of a device of a BBU according to the embodiment of the present disclosure;
Fig. 7 is a schematic view of a device of a BBU for receiving configuration information according to the embodiment of the present disclosure.

### DETAILED DESCRIPTION

In the embodiments of the present disclosure, an RRU determines the configuration information corresponding to the index information received from a BBU according to the correspondence between preset index information and configuration information, and the RRU performs configuration processing according to the configuration information. In the embodiments of the present disclosure, multiple sets of configuration information are stored in the RRU, and when different configuration information is required to be used, the modification of the configuration information about the RRU can be performed by simply notifying the RRU of the index information corresponding to the configuration to be modified, thereby simplifying the modification procedure of the configuration information about the RRU.

The index information is information for uniquely identifying attribute information, such as number, letter, etc.

Preferably, the configuration information can include part of or all of the hardware attribute information of the RRU.

The hardware attribute information of the RRU includes but is not limited to following information: power, frequency band indication, bandwidth, temperature of power amplifier, standing wave, etc.

The index information includes hardware attribute information as well as network information.

The network information includes but is not limited to at least one of the following information: country code, network code, longitude, latitude, cell ID.

The index information may not only be specific information or an information range but include null information which corresponds to configuration information; therefore, upon reception of such a null information, it is possible to determine the configuration information corresponding to the null information according to the correspondence between index information and configuration information.

When the configuration information stored in an RRU is hardware attribute information such as power, frequency band indication, bandwidth or temperature of a power amplifier, its corresponding configuration information may be a specific value or a specific range.

The embodiments of the present disclosure will be further described in detail below in combination with appended drawings of the specification.

The correspondence between index information and configuration may be stored in an RRU or a BBU, both being discussed respectively below.

Case 1: the correspondence between index information and configuration information is stored in an RRU.

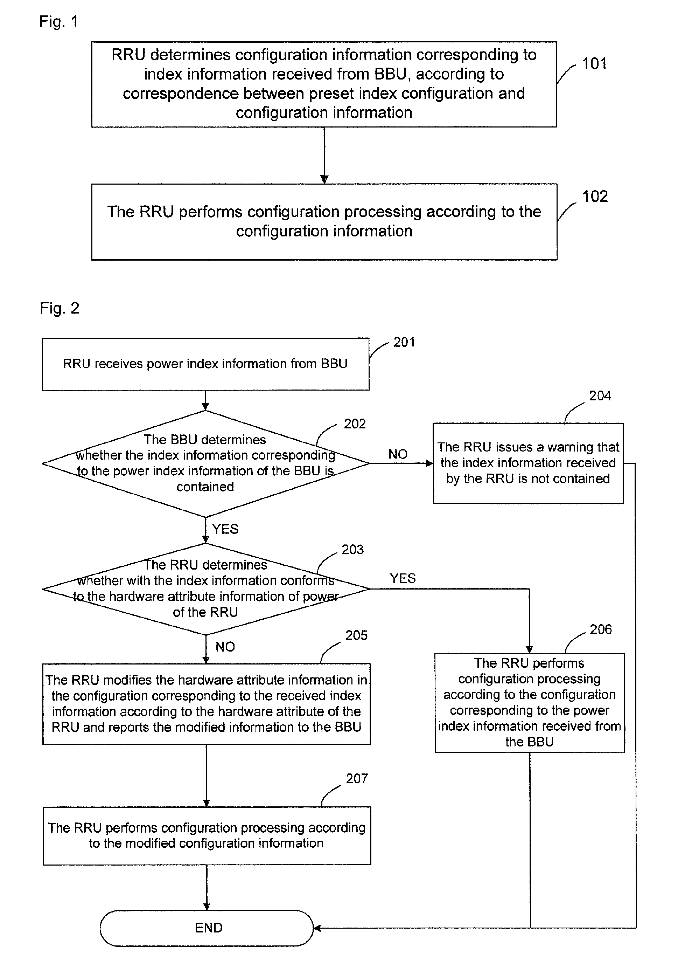

As shown in Fig. 1, the method for automatically configuring a remote radio unit according to the embodiments of the present disclosure includes following steps:
step 101: according to the correspondence between preset index information and configuration information, an RRU determines the configuration information corresponding to the index information received from a BBU;
step 102: the RRU performs configuration processing according to the configuration information.

Preferably, step 101 specifically includes: the RRU determines whether the correspondence between stored index information and configuration information includes the index information received by the RRU, if not, the RRU issues a warning that the correspondence between index information and configuration information stored in the RRU does not contain the index information received by the RRU;
if yes, the RRU determines whether the hardware attribute information in the configuration information corresponding to the index information received from the BBU conforms to the hardware attribute information of the RRU, if the hardware attribute information in the configuration information corresponding to the index information received from the BBU by the RRU conforms to the hardware attribute information of the RRU, go to step 102;
if the hardware attribute information in the configuration information corresponding to the index information received from the BBU by the RRU does not conform to the hardware attribute information of the RRU, the RRU issues a warning or modifies the hardware attribute information in the configuration information corresponding to the index information received from the BBU according to the hardware attribute of the RRU, so as to make the modified hardware attribute information conform to the hardware attribute of the RRU, and reports the modified information to the BBU.

Preferably, in step 102, the RRU may also firstly check whether the hardware attribute information in the configuration information is abnormal.

Specifically, the RRU determines whether the hardware attribute information in the configuration information corresponding to the index information received from the BBU conforms to the hardware attribute information of the RRU, if yes, the RRU performs configuration processing according to stored configuration information;
if not, the RRU may perform processing in either of the following modes:
mode 1: the RRU issues a warning, for example, the RRU sends warning information to the BBU or background in a form of picture and/or text, or the RRU issues a warning in a form of sound, or the RRU sends warning information to maintenance personnel in a form of short messaging service message, etc.;
mode 2: the RRU modifies the configuration information corresponding to the index information from the BBU and performs configuration processing according to the modified configuration information.

The modified configuration information is required to conform to the hardware attribute information of the RRU.

For example, assuming that the hardware attribute information includes power, the power value in the configuration information corresponding to the index information received from the BBU by the RRU is 55 Watt, while the power range of this RRU is in 0 Watt to 50 Watt, the power value in the configuration is not within the power range of the RRU, and thus the hardware attribute information in the configuration information does not conform to the hardware attribute information of the RRU. At this time, the RRU modifies the configuration information corresponding to the index information from the BBU by amending hardware attribute information of power to 50 Watt, and reports the modified information to the BBU.

When the RRU modifies the configuration information corresponding to the index information from the BBU, the hardware attribute information corresponding to the index information from the BBU is modified to an arbitrary value which is no less than 0 Watt and no more than 50 Watt, as preset.

Here, the modification of the power configuration information parameter is also adapted to modifications of the configuration parameters of the hardware attribute information of other RRUs.

The scheme of the case 1 is described below taking the fact that the index information received by an RRU is power as an example. As shown in Fig. 2, the specific steps are as following:
step 201: an RRU receives power index information from an BBU;
step 202: the RRU determines whether index information corresponding to the power index information received from the BBU is contained, going to step 203 if yes and to step 204 otherwise;
step 203: the RRU determines whether the hardware attribute information of power in the configuration information corresponding to the power index information received from the BBU conforms to the hardware attribute information of power of the RRU, going to step 205 if not and to step 206 otherwise;
step 204: the RRU issues a warning processing that the index information received by the RRU is not contained in the correspondence between index information and configuration information stored in the RRU and terminates this flow;
step 205: the RRU modifies the hardware attribute information in the configuration information corresponding to the index information received from the BBU according to the hardware attribute of the RRU, and reports the modified information to the BBU, going to step 207;
step 206: the RRU performs configuration processing according to the configuration information corresponding to the power index information received from the BBU and terminates this flow;
step 207: the RRU performs configuration processing according to the modified configuration information and terminates this flow.

Case 2: the correspondence between index information and configuration information is stored in an BBU.

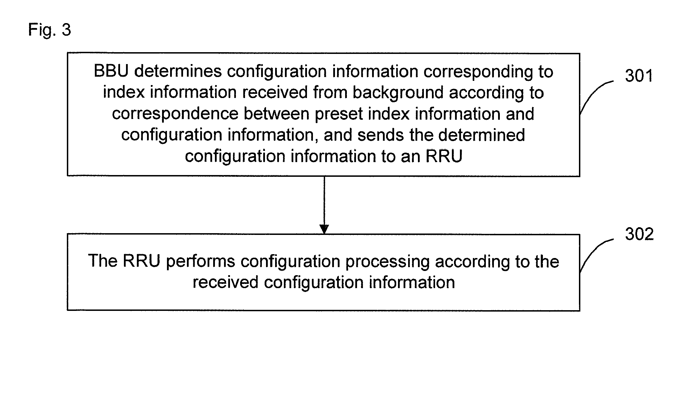

As shown in Fig. 3, the method for automatically configuring a remote radio unit according to the embodiments of the present disclosure includes the following steps:
step 301: according to the correspondence between preset index information and configuration information, a BBU determines the configuration information corresponding to the index information received from background, and sends the determined configuration information to an RRU;
step 302: the RRU performs configuration processing according to received configuration information.

Preferably, step 3 specifically includes: the BBU receives the index information received from background, determines whether the correspondence between index information and configuration information contains the index information received by the BBU, the BBU issues a warning if not; otherwise, according to the correspondence between preset index information and configuration information, the BBU determines the configuration information corresponding to the index information received from the background and sends the determined configuration information to the RRU.

The mode in which the BBU issues the warning includes but is not limited to: the BBU sends warning information to the background in the form of figure and/or in text, or the BBU issues a warning with sound, or the BBU sends warning information to maintenance personnel in the form of short messaging service message, etc.

Preferably, step 302 specifically includes: the RRU determines whether the hardware attribute information in received configuration information conforms to the hardware attribute of the RRU, the RRU performs configuration processing according to the received configuration information if yes;
if not, the RRU has two processing modes:
mode 1: the RRU issues a warning, for example, the RRU sends warning information to the BBU or background in the form of figure and/or in text, or the RRU issues a warning in the form of sound, or the RRU sends warning information to maintenance personnel in the form of short messaging service message, etc.;
mode 2: the RRU modifies the configuration information corresponding to the index information from the BBU and performs configuration processing according to the modified configuration information, further reports the modified information to the BBU.

The modified configuration information is required to conform to the hardware attribute information of the RRU.

The modification method of the hardware attribute information is similar to that illustrated in Fig. 3 and will not be repeated.

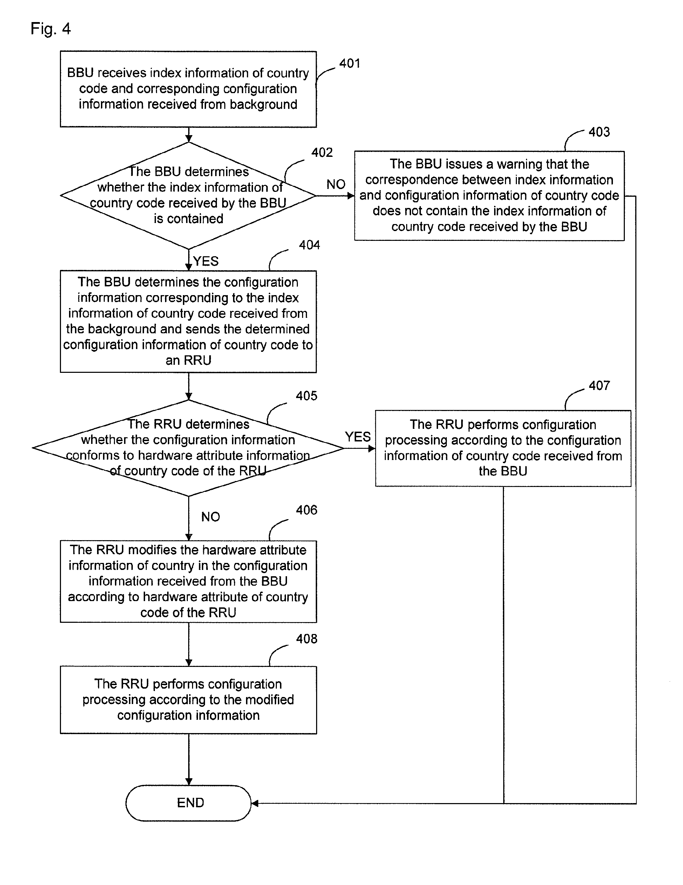

The scheme of the case 2 is described below assuming that the index information received by an BBU is country code. As shown in Fig. 4, the specific steps are as following:
step 401: an BBU receives index information of the country code from background and corresponding configuration information;
step 402: the BBU determines whether the correspondence between index information and configuration information of country code contains the index information of country code received by the BBU, go to step 403 if not and to step 404 if yes;
step 403: the BBU issues a warning that the index information of country code received by the BBU is not contained in the correspondence between index information and configuration information of country code and terminates this flow;
step 404: according to the correspondence between preset index information and configuration information of country code, the BBU determines the configuration information corresponding to the index information of country code received from background, and sends the determined configuration information of country code to an RRU;
step 405: the RRU determines whether the configuration information of country code received from the BBU conforms to the hardware attribute information of country code of the RRU, go to step 406 if not and to step 407 otherwise;
step 406: the RRU modifies the hardware attribute information of country code in the configuration information received from the BBU according to the hardware attribute of country code of the RRU, and reports the modified information to the BBU, go to step 408;
step 407: the RRU performs configuration processing according to the configuration information corresponding to the index information of country code received from the BBU and terminates this flow;
step 408: the RRU performs configuration processing according to the modified configuration information and terminates this flow.

Based on the same inventive concept, the embodiments of the present disclosure further provides a device for automatically configuring a remote radio unit. The implementation may refer to the implementation of the method for automatically configuring a remote radio unit in Fig. 1 and will not be repeated here.

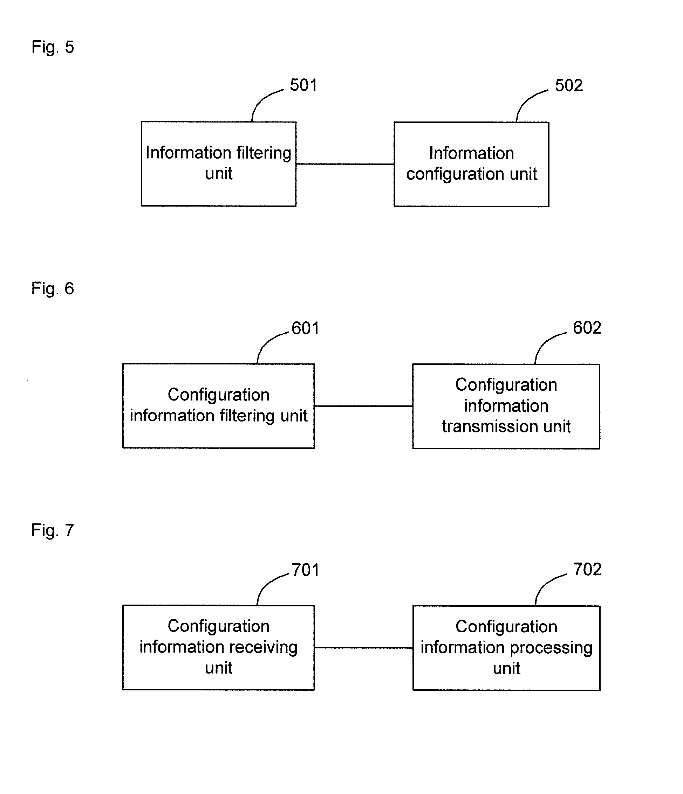

Fig. 5 shows an RRU according to the embodiments of the present disclosure, which includes an information filtering unit 501 and an information configuration unit 502.

The information filtering unit 501, which may be implemented by a filter in the RRU, is configured to, according to the correspondence between preset index information and configuration information, determine the configuration information corresponding to the index information received from a BBU;
the information configuration unit 502, which may be implemented by CPU, DSP or FPGA, is configured to perform configuration processing according to the configuration information.

The information filtering unit 501 is specifically configured to: determine whether the correspondence between stored index information and configuration information includes the index information received by the RRU, if not, issue a warning that the correspondence between index information and configuration information stored in the RRU does not contain the index information received by the RRU;
if yes, determine whether the hardware attribute information in the configuration information corresponding to the index information received from the BBU conforms to the hardware attribute information of the RRU, if the hardware attribute information in the configuration information corresponding to the index information received from the BBU conforms to the hardware attribute information of the RRU, send the information to the information configuration unit;
if the hardware attribute information in the configuration information corresponding to the index information received from the BBU does not conform to the hardware attribute information of the RRU, issue a warning or modify the hardware attribute information in the configuration information corresponding to the index information received from the BBU according to the hardware attribute of the RRU, so as to make the modified hardware attribute information conform to the hardware attribute of the RRU, and reports the modified information to the BBU.

The information configuration unit 502 is specifically configured to: if the hardware attribute information in the configuration information corresponding to the index information received from the BBU conform to the hardware attribute information of the RRU, perform configuration processing according to stored configuration information in the RRU;
if not, there are two processing modes:
mode 1: issue a warning processing, for example, send warning information to the BBU or background in the form of figure and/or in text, or issue a warning with audio, or send warning information to maintenance personnel in the form of short messaging service message, etc.;
mode 2: modify the configuration information corresponding to the index information from the BBU and perform configuration processing according to the modified configuration information, further report the modified information to the BBU.

The modified configuration information is required to conform to the hardware attribute information of the RRU.

Based on the same inventive concept, the embodiments of the present disclosure further provides a device for automatically configuring a remote radio unit, whose implementation may refer to the implementation of the method for automatically configuring a remote radio unit in Fig. 3 and the same places will not be repeated for the principle for the device to solve problems is similar to the method.

Fig. 6 shows a BBU according to the embodiments of the present disclosure, which comprises a configuration information filtering unit 601 and a configuration information transmission unit 602.

The configuration information filtering unit 601, which may be implemented by a filter in the BBU, is configured to, according to the correspondence between preset index information and configuration information, determine the configuration information corresponding to the index information received from background;
the configuration information transmission unit 602, which may be implemented by CPU, DSP or FPGA in the BBU, is configured to send determined configuration information to the RRU.

Preferably, the configuration information filtering unit 601 is specifically configured to determine whether the correspondence between stored index information and configuration information includes the index information received by the BBU, if not, issue a warning that the correspondence between index information and configuration information does not contain the index information received by the BBU;
if yes, according to the correspondence between preset index information and configuration information, determine the configuration information corresponding to the index information received from background, and send the determined configuration information to an RRU.

The mode in which the BBU issues a warning includes but is not limited to: the BBU sends warning information to the background in the form of figure and/or in text, or the BBU issues a warning with sound, or the BBU sends warning information to maintenance personnel in the form of short messaging service message, etc.

Fig. 7 shows an RRU according to the embodiments of the present disclosure, which includes a configuration information receiving unit 701 and a configuration information processing unit 702:
the configuration information receiving unit 701, which may be implemented by a filter in the RRU, is configured to receive the configuration information sent by the BBU;
the configuration information processing unit 702, which may be implemented by CPU, DSP or FPGA in the BBU, is configured to perform configuration processing according to received configuration information.

Preferably, the configuration information processing unit 702 is configured to: determine whether the hardware attribute information in received configuration information conforms to the hardware attribute of the RRU, and perform configuration processing according to the received configuration information if yes.

If not, there are two processing modes:
mode 1: issue a warning, for example, send warning information to the BBU or background in the form of figure and/or in text, or issue a warning with sound, or send warning information to maintenance personnel in the form of short messaging service message, etc.;
mode 2: modify the configuration information corresponding to the index information from the BBU and perform configuration processing according to the modified configuration information, further report the modified information to the BBU.

The modified configuration information is required to conform to the hardware attribute information of the RRU.

In the device for automatically configuring a remote radio unit according to the embodiments of the present disclosure, the RRU may also include an information filtering unit 501, an information configuration unit 502 as well as a configuration information receiving unit 701, a configuration information processing unit 702 at the same time, thereby selecting corresponding processing unit of the RRU according to different BBU devices; the RRU uses the information filtering unit 501 and the information configuration unit 502 if it has received the correspondence between index information and configuration information; otherwise, the RRU uses the configuration information receiving unit 701 and the configuration information processing unit 702 if it has received the configuration information of the RRU.

Based on the same inventive concept, the embodiments of the present disclosure further provides a system for automatically configuring a remote radio unit, whose implementation may refer to the implementation of the method for automatically configuring a remote radio unit in Fig. 1 and the same places will not be repeated for the principle for the system to solve problems is similar to the method.

The embodiments of the present disclosure provide a system for automatically configuring a remote radio unit RRU, comprising a BBU and an RRU.

The BBU is configured to send index information to the RRU;
the RRU is configured to, according to the correspondence between preset index information and configuration information, determine the configuration information corresponding to the index information received from a BBU and perform configuration processing according to the configuration information.

Where, the RRU is specifically configured to: determine whether the correspondence between stored index information and configuration information includes the index information received by the RRU, if not, issue a warning processing that the correspondence between index information and configuration information stored in the RRU does not contain the index information received by the RRU;
if yes, determine whether the hardware attribute information in the configuration information corresponding to the index information received from the BBU conforms to the hardware attribute information of the RRU, if the hardware attribute information in the configuration information corresponding to the index information received from the BBU conforms to the hardware attribute information of the RRU, perform configuration processing according to received configuration information;
if the hardware attribute information in the configuration information corresponding to the index information received from the BBU does not conform to the hardware attribute of the RRU, there are two processing modes:
mode 1: issue a warning processing, for example, send warning information to the BBU or background in the form of figure and/or in text, or issue a warning with audio, or send warning information to maintenance personnel in the form of short messaging service message, etc.;
mode 2: modify the configuration information corresponding to the index information from the BBU and perform configuration processing according to the modified configuration information, further report the modified information to the BBU.

Where, the modified configuration information is required to conform to the hardware attribute information of the RRU.

Based on the same inventive concept, the embodiments of the present disclosure further provides a system for automatically configuring a remote radio unit. The implementation thereof may refer to the implementation of the method for automatically configuring a remote radio unit in Fig. 3 and will not be repeated here.

The embodiments of the present disclosure provide another system for automatically configuring a remote radio unit RRU, including a BBU and an RRU.

The BBU is configured to, according to the correspondence between preset index information and configuration information, determine the configuration information corresponding to the index information received from background, and send the determined configuration information to the RRU;
the RRU is configured to perform configuration processing according to received configuration information.

Preferably, he BBU is specifically configured to: determine whether the correspondence between stored index information and configuration information includes the index information received by the RRU, if not, issue a warning that the correspondence between index information and configuration information stored in the RRU does not contain the index information received by the RRU;
if yes, according to the correspondence between preset index information and configuration information, determine the configuration information corresponding to the index information received from background, and send the determined configuration information to an RRU.

The mode in which the BBU issues a warning includes but is not limited to: the BBU sends warning information to the background in the form of figure and/or in text, or the BBU issues a warning with sound, or the BBU issues warning information to maintenance personnel in the form of short messaging service message, etc.

Preferably, the RRU is configured to determine whether the hardware attribute information in received configuration information conforms to the hardware attribute of the RRU, if yes, perform configuration processing according to the received configuration information.
if not, there are two processing modes:
mode 1: issue a warning, for example, send warning information to the BBU or background in the form of figure, or send warning information to the BBU or background in the form of text, or send warning information to maintenance personnel in the form of short messaging service message, etc.;
mode 2: modify the configuration information corresponding to the index information from the BBU and perform configuration processing according to the modified configuration information, further report the modified information to the BBU.

The modified configuration information is required to conform to the hardware attribute information of the RRU.

Those skilled in the art should understand that the embodiments of the disclosure may be provided in the form of method, system or computer programme product. Therefore, the disclosure may be in the form of, such as, a complete hardware embodiment, a complete software embodiment or a combination of software and hardware embodiments. Moreover, the disclosure may be in form of a computer programme product which is implemented on one or more computer-usable memory medium (comprising but not limited to disk memory, CD-ROM and optical memory, etc.) comprising computer-usable programme codes.

The disclosure is described according to the flow charts and/or block diagrams of the method, device (system) and computer programme product of the embodiments of the disclosure. It should be understood that each process and/or block in the flow charts and/or block diagrams, and a combination of processes and blocks in the flow charts and/or block diagrams can be implemented using computer programme instructions. These computer programme instructions can be provided to general purpose computer, special purpose computer, embedded processor and processor of other programmable data processing equipments to generate a machine, so as to generate a device which implements functions designated in one or more processes of a flow chart and/or in one or more blocks of a block diagram by a computer or a processor of other programmable data processing equipment.

These computer programme instructions also can be stored in a computer-readable memory which is able to guide the computer or other programmable data processing equipments to operate in a specific manner, which makes the instructions stored in the computer-readable memory generate a manufacture comprising the instruction device, which implements the functions designated in one or more processes of the flow chart and/or in one or more blocks of the block diagram.

These computer programme instructions also can be loaded into a computer or other programmable data processing equipments, which makes a series of operating steps are executed on the computer or the other programmable equipments in order to generate the processing implemented by the computer, such that the instructions which are executed on the computer or the other programmable equipments are provided for implementing the steps of the functions that are designated in one or more processes of the flow chart and/or in one or more blocks of the block diagram.

Although preferred embodiments of the present disclosure have been discussed, those skilled in the art may carry out other variations and modifications to those embodiments once they have got the basic creative concept. Thus, the appended claims are intended to be explained as the preferred embodiments and all the variations and modifications within the scope of the present disclosure.

Apparently, modifications and variations to the disclosure by the skilled in the art are not beyond the spirit and the scope of the disclosure. In this way, if these modifications and variations to the disclosure are not beyond the scope of the claims and their equivalent technology, the disclosure is intended to include these modifications and variations.

## Claims

1. A method for automatically configuring a remote radio unit (RRU) comprising:
determining, by the RRU, according to a correspondence between preset index information and configuration information, the configuration information corresponding to the index information received from a building baseband unit (BBU); and
performing, by the RRU, configuration according to the configuration information.

2. The method according to claim 1, further comprising:
after determining the configuration information corresponding to the index information received from the BBU and before performing configuration according to the configuration information,
determining, by the RRU, whether hardware attribute information in the configuration information corresponding to the index information received from the BBU conforms to hardware attribute of the RRU.

3. The method according to claim 2, further comprising:
when the hardware attribute information in the configuration information corresponding to the index information received from the BBU does not conform to the hardware attribute of the RRU,
issuing, by the RRU, a warning; or,
modifying the hardware attribute information in the configuration information corresponding to the index information received from the BBU according to the hardware attribute of the RRU, to make the modified hardware attribute information conform to the hardware attribute of the RRU.

4. The method according to claim 3, wherein performing, by the RRU, configuration according to the configuration information comprises:
performing, by the RRU, configuration according to the modified configuration information, when the RRU has modified the hardware attribute information in the configuration information corresponding to the index information received from the BBU according to the hardware attribute of the RRU.

5. The method according to any of claims 1 to 4, further comprising:
issuing, by the RRU, a warning, when the index information received by the RRU is not contained in the correspondence between the index information and configuration information.

6. A method for automatically configuring a remote radio unit, comprising:
determining, by a building baseband unit (BBU), the configuration information corresponding to the index information received from background according to the correspondence between preset index information and configuration information, and transmitting the determined configuration information to the RRU; and
performing, by the RRU, configuration according to the received configuration information.

7. The method according to claim 6, further comprising:
after receiving the configuration information and before performing configuration according to the configuration information,
determining, by the RRU, whether the hardware attribute information in the received configuration information conforms to the hardware attribute of the RRU.

8. The method according to claim 7, further comprising:
after receiving the configuration information,
issuing, by the RRU, a warning, when the hardware attribute information in the received configuration information does not conform to the hardware attribute of the RRU; or,
modifying the hardware attribute information in the received configuration information according to the hardware attribute of the RRU, to make the modified hardware attribute information conform to the hardware attribute of the RRU.

9. The method according to claim 8, wherein performing, by the RRU, configuration according to the configuration information comprises:
performing, by the RRU, configuration according to the modified configuration information, when the RRU has modified the received hardware attribute information according to the hardware attribute of the RRU.

10. The method according to any of claims 6 to 9, further comprising:
issuing, by the RRU, a warning, when the index information received by the BBU is not contained in the correspondence between the index information and configuration information.

11. A remote radio unit (RRU), comprising:
an information filtering unit configured to, according to correspondence between preset index information and configuration information, determine the configuration information corresponding to index information received from a building baseband unit (BBU); and
an information configuration unit configured to perform configuration according to the configuration information.

12. The RRU according to claim 11, wherein the information filtering unit is further configured to:
after determining the configuration information corresponding to the index information received from the BBU, determine whether the hardware attribute information in the configuration information corresponding to the index information received from the BBU conforms to hardware attribute of the RRU.

13. The RRU according to claim 12, wherein the information filtering unit is further configured to, after determining that the hardware attribute information in the configuration information corresponding to the index information received from the BBU does not conform to the hardware attribute information of the RRU, issue a warning; or, modify hardware attribute information in the configuration information corresponding to the index information received from the BBU according to the hardware attribute of the RRU, so as to make the modified hardware attribute information conform to the hardware attribute of the RRU.

14. The RRU according to claim 13, wherein the information filtering unit is further configured to, when the RRU has modified the hardware attribute information of the configuration information corresponding to the index information received from the BBU according to the hardware attribute of the RRU, perform configuration according to the modified configuration information.

15. The RRU according to any of claims 11 to 14, wherein the information filtering unit is further configured to, when the index information received by the RRU is not contained in the correspondence between index information and configuration information, issue a warning.

16. A building baseband unit (BBU), comprising:
an configuration information filtering unit configured to, according to correspondence between preset index information and configuration information, determine configuration information corresponding to index information received from background;
a configuration information transmission unit configured to send the determined configuration information to a remote radio unit (RRU).

17. The BBU according to claim 16, wherein the configuration information filtering unit is further configured to, when the index information received by the BBU is not contained in the correspondence between the index information and configuration information, issue a warning.

18. A remote radio unit (RRU), comprising:
a configuration information receiving unit configured to receive configuration information from a building baseband unit (BBU), wherein the configuration information, corresponding to index information received from background, is determined by the BBU according to correspondence between preset index information and configuration information; and
a configuration information processing unit configured to perform configuration according to received configuration information.

19. The RRU according to claim 18, wherein the configuration information processing unit is configured to, after determining that the hardware attribute information in the configuration information received conforms to hardware attribute of the RRU, perform configuration according to the configuration information.

20. The RRU according to claim 18, wherein the configuration information processing unit is configured to, after determining that the hardware attribute information in the received configuration information does not conform to the hardware attribute information of the RRU, issue a warning; or, modify the hardware attribute information in the received configuration information according to the hardware attribute of the RRU, so as to make the modified hardware attribute information conform to the hardware attribute of the RRU.

21. The RRU according to claim 18, wherein the configuration information processing unit is further configured to, when the RRU has modified the received hardware attribute information according to the hardware attribute of the RRU, perform configuration according to the modified configuration information.

22. A system for automatically configuring a remote radio unit (RRU) comprising:
a building baseband unit (BBU) configured to, according to the correspondence between preset index information and configuration information, determine configuration information corresponding to index information received from background, send the determined configuration information to the RRU; and
an RRU configured to perform configuration according to the configuration information received.
